# EUROPÄISCHE PATENTSCHRIFT

(11) **EP 2 042 291 B1**
(45) Veröffentlichungstag und Bekanntmachung des Hinweises auf die Patenterteilung: **23.04.2014**
(21) Anmeldenummer: 07019221.6
(22) Anmeldetag: 29.09.2007
(51) Int. Cl.: B29C 45/37, B29C 45/14, B29C 33/56, B29K 711/08, B29L 31/30

(54) **Verfahren zur Herstellung eines Formteils und Formteil**
Method for producing a moulded part and moulded part
Procédé de fabrication d'une pièce moulée et pièce moulée

(43) Veröffentlichungstag der Anmeldung: 01.04.2009
(73) Patentinhaber: Bayerische Motoren Werke Aktiengesellschaft, 80809 München (DE); HTP High Tech Plastics GmbH, 8753 Fohnsdorf (AT)
(72) Erfinder: Vollmer, Guido, 80637 München (DE); Gurmann, Christian, 8020 Graz (AT)
(74) Vertreter: Vogel, Andreas

(56) Entgegenhaltungen:
- DE-A1- 10 119 494
- DE-A1- 19 926 470
- US-A- 5 650 115

## Beschreibung

Die Erfindung betrifft ein Verfahren zur Herstellung eines Formteils, bei dem eine Lederschicht mit ihrer Ansichtsseite auf eine Formwand bzw. zumindest eine Teilfläche einer Formwand eines Formwerkzeuges aufgelegt und positioniert gehalten wird, wobei ein Kunststoffmaterial zur Bildung einer Kunststoffschicht auf der Innenseite der Lederschicht unter Druck in einen Formhohlraum des Formwerkzeugs eingebracht wird. Weiterhin umfasst die Erfindung ein Formteil.

Für die Herstellung von beispielsweise bandförmigen Formteilen wie Uhrarmbändern oder Gürteln sind verschiedene Maßnahmen bekannt, um dem Produkt das Aussehen und die Flexibilität von Leder zu geben.

In der Patentschrift CH 587 121 A ist ein Verfahren zum Herstellen von Bändern oder Riemen, insbesondere aus Kunststoff, offenbart. Dabei wird von einem Prototyp aus echtem Leder ein Abdruck aus Silikonkautschuk angefertigt, welcher Teil einer Pressform zur Herstellung von Formteilen bildet. In der Form wird ein Schichtstoff hergestellt, der wenigstens eine Schicht aus einem expandierbaren Material enthält. Das Produkt hat angeblich eine große Ähnlichkeit mit dem Prototyp, insbesondere hinsichtlich des Glanzes und Griffes des Prototyps auf der oberen Fläche.

Ein derart hergestelltes Kunstleder erreicht jedoch weder optisch noch in der Haptik die Eigenschaften von echtem Leder. Es wurde daher schon verschiedentlich vorgeschlagen, mindestens eine Schicht aus Leder mit mindestens einer Schicht aus Kunststoff zu verbinden. Damit wird bezweckt, die positiven Eigenschaften des Leders wie Aussehen, Flexibilität und Geschmeidigkeit mit den positiven Eigenschaften von Kunststoff wie Festigkeit und Feuchtigkeitsbeständigkeit zu kombinieren.

Aus der Patentschrift AT 381 846 B ist bekannt, eine Schubschlaufe für Riemen herzustellen, indem ein ringförmiger Träger, insbesondere aus Kunststoff, mit einer Schicht aus Leder oder lederähnlichem Material ummantelt wird.

Gemäß der Patentschrift AT 384 531 B besteht ein Riemen aus wenigstens einem Streifen aus Leder oder lederähnlichem Werkstoff und aus einem Kunststoffträger, wobei die Außenfläche des Kunststoffträgers stufenlos in die Außenfläche des Streifens übergeht und wobei sich der Werkstoff des Kunststoffträgers von der Unterseite her in den Streifen aus Leder oder lederähnlichem Werkstoff hinein erstreckt. Um verschiedene Gestaltungsmöglichkeiten zu eröffnen, wobei der Riemen robust und gegen den Eintritt von Feuchtigkeit in den Streifen aus Leder oder lederähnlichem Werkstoff geschützt sein soll, ist wenigstens ein Streifen aus Leder oder lederähnlichem Werkstoff vorgesehen, der in der Riemenlängsrichtung verlaufend auf der Sichtseite oder Unterseite des Riemens angeordnet ist.

Die Patentschrift AT 398 026 B beschreibt ein Verfahren zur Herstellung von Gegenständen, die wenigstens eine Lage aus flächigem Werkstoff und eine mit dieser Lage verbundene Lage aus Kunststoff aufweisen. Die Lage aus flächigem Werkstoff wird in einen Formhohlraum an wenigstens einer der Formwände anliegend eingebracht und festgehalten, beispielsweise durch Anlegen von Unterdruck insbesondere im Bereich der Umfangsränder der Lage. In den Formhohlraum wird ein Kunststoff in fließfähigem Zustand oder in festem Zustand, vorzugsweise als Vorformling, den man wenigstens im Bereich seiner Oberfläche in einen plastischen Zustand überführt, eingebracht. Zu seiner Verbindung mit der Lage aus Leder oder lederähnlichem Werkstoff lässt man den Kunststoff in diese teilweise eindringen. Der Kunststoff wird um die Außenränder der Lage aus Leder oder lederähnlichem Werkstoff abdeckend herumgeformt. Nach einer Ausführungsart wird der Kunststoff in den Formhohlraum durch Spritzgießen eingebracht.

Aus der US 5,650.115 A ist ein Verfahren zur Herstellung von formgepressten Airbagbezügen und anderer Artikel mit einer integrierten Lederschicht bekannt. Die DE 101 19 494 A1 beschreibt Formkörper aus Leder und einem Thermoplast und ein Verfahren zu deren Herstellung.

Das Verbinden von Leder und Kunststoff durch Einspritzen des Kunststoffes in eine Form erscheint einfach und kostengünstig, hat aber den Nachteil, dass so hergestellte Formteile dazu neigen, die Optik und Haptik echten Leders zu verlieren, insbesondere weil das Leder an der Formwand flach gedrückt wird und dadurch seine natürliche Narbung der Oberfläche verliert.

Ausgehend von diesem Stand der Technik liegt der Erfindung die Aufgabe zu Grunde, ein Verfahren zur Herstellung eines Formteils mit mindestens einer aus Leder bestehenden Schicht anzugeben, wobei das Formteil eine durch Leder gebildete Ansichtsseite aufweist, die in ihrer Oberflächenstruktur und ihrer Haptik einer strukturieren Naturlederoberfläche möglichst entspricht, bei welchem auch dann, wenn die Lederteile mit Kunststoff hinterspritzt werden oder sind, die Lederteile ihre ursprünglichen Eigenschaften und insbesondere ihre Optik und Haptik beibehalten.

Gelöst wird die Aufgabe erfindungsgemäß durch ein Verfahren gemäß Anspruch 1. Durch die Auswahl der Sperrschicht aus einer möglichst druck- und wärmebeständigen Kunststofffolie kann ein Eindringen des hinterspitzten Kunststoffmaterials in die Lederschicht zuverlässig verhindert werden. Da die Belastung der Sperrschicht durch die Einspritztemperatur jedoch sehr kurzfristig ist, ist es nicht unbedingt erforderlich, dass die Schmelztemperatur des Sperrschichtmaterials höher als die Einspritztemperatur des Kunststoffs der Kunststoffschicht ist. So kann insbesondere auch eine Kunststofffolie aus PVC für die Sperrschicht zum Einsatz kommen.

Durch den Druck des die Kunststoffschicht bildenden Kunststoffmaterials wird die Lederschicht derart stark gegen die Oberfläche der Teilfläche mit ihrer strukturierten Oberflächenform gedrückt, dass sich die erhabenen Bereiche in die Ansichtsseite der Lederschicht einpressen bzw. diese Ansichtsseite prägen, so dass diese die strukturierte Oberfläche der Teilfläche übernimmt. Damit wird eine dauerhafte Verformung der Ansichtsseite der Lederschicht des Formteils erzielt. Der durch die erfindungsgemäßen Maßnahmen erreichte Vorteil besteht darin, dass das Formteil die Optik und Haptik von echtem Leder aufweist.

Das Einbringen des Kunststoffmaterials kann insbesondere im Rahmen herkömmlicher, aus dem Stand der Technik bekannter Verfahren, wie Spritzgießen oder Spritzprägen erfolgen, die weitere bereits bekannte Verfahrensschritte, wie beispielsweise die Erzeugung eines Nachdrucks umfassen können.

Vorzugsweise wird die Lederschicht während des Prozesses erwärmt, wodurch aufgrund geänderter Materialeigenschaften das Einprägen der Struktur in die Ansichtsseite der Lederschicht verbessert wird. In der Regel erfolgt eine solche Erwärmung bereits durch das in das Formwerkzeug eingebrachte plastifizierte - und somit heiße - Kunststoffmaterial.

Vorzugsweise kann die Sperrschicht aus Polyvinylchlorid gebildet sein.

Eine hohe Elastizität und räumliche Verformbarkeit des gesamten Formteils kann zudem dann erreicht werden, wenn der eingespritzte Kunststoff der Kunststoffschicht aus einem Material der Gruppe aus Polyvinylchlorid, ABS, Polyurethan gebildet wird.

Ein erfindungsgemäßes Formteil umfasst eine Lederschicht und eine auf einer von der Ansichtsseite der Lederschicht abgewandten Seite angeordnete Kunststoffschicht, wobei die Leder- und die Kunststoffschicht dadurch verbunden werden, dass die Lederschicht mit ihrer Ansichtsseite auf eine Formwand eines Formwerkzeuges aufgelegt wird und ein Kunststoffmaterial zur Bildung einer Kunststoffschicht auf der Innenseite der Lederschicht unter Druck in einen Formhohlraum des Formwerkzeugs eingebracht wird und ist dadurch gekennzeichnet, dass durch den Druck beim Einbringen des Kunststoffs in die Ansichtsseite der Lederschicht eine Struktur der Oberfläche der Formwand eingeprägt wird, wobei zwischen der Lederschicht und Kunststoffschicht eine Sperrschicht angeordnet ist. Das Formteil ist ferner dadurch gekennzeichnet, dass die Sperrschicht aus einer druck- und wärmebeständigen Kunststofffolie, insbesondere aus PVC besteht und dass die Schmelztemperatur der Sperrschicht höher ist als die Einbringtemperatur des Kunststoffs der Kunststoffschicht ist.

Vorteilhaft ist hierbei, dass durch das Zusammenwirken der verschiedenen Schichten ein Formteil geschaffen werden kann, bei dem zumindest die Lederschicht elastisch und in unterschiedliche Raumrichtungen verformbar ist und einem aus unterschiedlichen Natur- oder Kunstlederschichten hergestellten Formteil sehr ähnlich ist. Darüber hinaus ist es mit einem derartigen Formteil möglich, mit Leder verkleidete Bauteile, insbesondere für Transportmittel wie Fahrzeuge herzustellen, die an die jeweiligen Sicherheitsvorschriften hinsichtlich Dämpfungswirkung, Wärmebelastungen, Schalldämmung einfach anpassbar sind. Durch die Sperrschicht kann verhindert werden, dass die an sich flexible Lederschicht durch das Einbringen des Kunststoffes unter hohem Druck auf der Innenseite, die auch Fleischseite genannt wird und sehr offenporig ist, nicht versteift wird. Dadurch kann die Elastizität des Formteils trotz der Verstärkung durch die Kunststoffschicht beibehalten werden.

Eine hohe Elastizität und räumliche Verformbarkeit des gesamten Formteils kann zudem erreicht werden, wenn der eingespritzte Kunststoff der Kunststoffschicht aus einem Material aus der Gruppe aus Polyvinylchlorid, ABS oder Polyurethan gewählt ist.

Die Erfindung wird im Nachfolgenden anhand der in den Zeichnungen dargestellten Ausführungsbeispiele näher erläutert.

Es zeigen:
- Fig. 1: einen Teil eines Formwerkzeuges in schaubildlicher und stark vereinfachter Darstellung
- Fig. 2: das Formwerkzeug nach Fig. 1 in Stirnansicht geschnitten, mit auf dem unteren Werkzeugteil aufgesetzten oberen Werkzeugteil, in vereinfachter schematischer Darstellung;
- Fig. 3: ein erfindungsgemäßes Formteil mit den diesen bildenden Schichten in voneinander getrennter Lage sowie einem Teilabschnitt des Formwerkzeuges, in schaubildlich vereinfachter Darstellung;
- Fig. 4: ein weiteres Formwerkzeug zur Durchführung des erfindungsgemäßen Verfahrens in Stirnansicht, in geschnittener und stark vereinfachter, schematischer Darstellung;
- Fig. 5: den erfindungsgemäßen Formteil in Seitenansicht geschnitten, in entspannter Lage nach Entnahme aus dem Formwerkzeug;
- Fig. 6 :: zeigt einen Aufbau der verschiedenen Schichten eines Schichtenverbundes zur Herstellung eines Formteils durch Hinterspritzen mit einem Kunststoff in explosionsartiger, schaubildlicher Darstellung
- Fig. 7 :: eine Ausführungsvariante eines erfindungsgemäßen Formteils in Explosionsdarstellung und stark vereinfachter Darstellung; und
- Fig. 8 :: eine andere Ausführungsform eines erfindungsgemäßen Formteils in Seitenansicht, in geschnittener und stark vereinfachter, schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die in den Zeichnungen teilweise dargestellten und nachfolgend beschriebenen Zwischenschichten 27, 40, die Kleberschichten 25, 34 sowie die Klebefolien 35, 36 sind nicht Bestandteil der Erfindung.

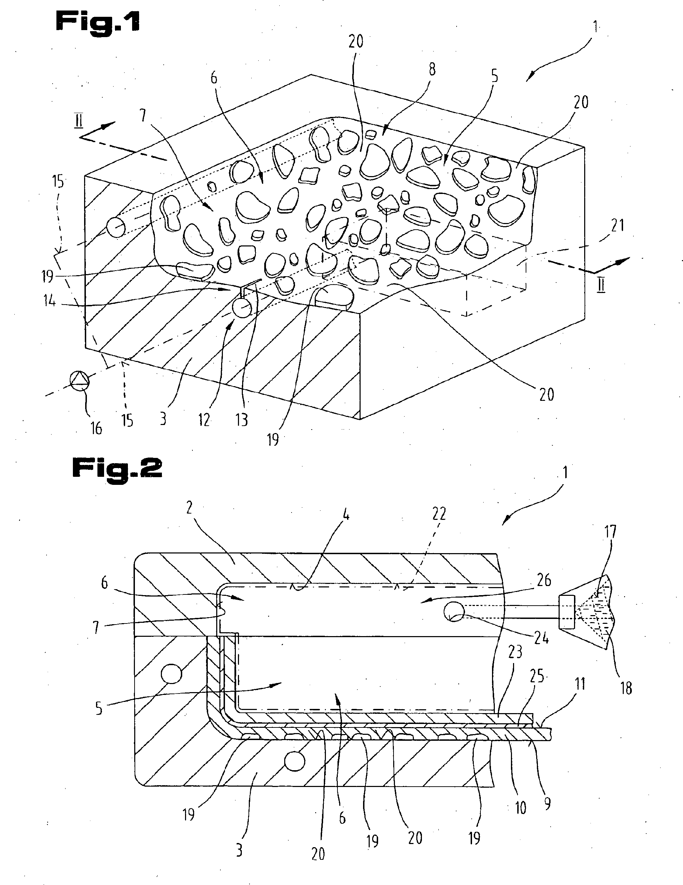

In den Fig. 1 und 2 ist ein Formwerkzeug 1, bestehend aus einem oberen Werkzeugteil 2 und einem unteren Werkzeugteil 3 dargestellt.

Jeder der beiden Werkzeugteile 2 und 3 weist Formwandteile 4 und 5 auf, die zusammen eine einen Formhohlraum 6 umgrenzende Formwand 7 bilden. Im unteren Werkzeugteil 3 kann, wie beispielsweise in Fig. 1 und 2 dargestellt, zumindest eine Teilfläche 8 vorgesehen sein, an der eine Ansichtsseite 9 einer Lederschicht 10 zur Anlage gebracht werden kann. Eine Naturlederschicht besteht üblicherweise aus der glatten, strapazierfähigen Ansichtsseite 9 und einer dieser gegenüberliegenden Innenseite 11, die auch Fleischseite genannt wird. Die Innenseite 11, ist meist sehr grobporig und fasrig ausgebildet, weil diese dem Körper des Tieres zugewandt war.

Zum Fixieren der Lederschicht 10 im Formhohlraum 6, so dass diese in einer bestimmten, vordefinierten Position mit dem zu hinterspritzenden Kunststoff 17 verbunden werden kann, können unterschiedliche Haltevorrichtungen 12 vorgesehen sein. So ist es beispielsweise möglich, dass die einzulegende Lederschicht 10 mit einem Haftmittel versehen ist, welches ein Anhaften an der Teilfläche 8 der Formwand 7 ermöglicht. Es ist aber auch möglich, die Lederschicht 10 beispielsweise durch einen Unterdruck zu positionieren, wozu die Teilfläche 8 der Formwand 7 zumindest partiell durch zumindest ein für Luft poröses Einsatzelement gebildet sein kann. Es können aber auch in der Teilfläche 8 Ansaugöffnungen 13 vorgesehen sein, die über Kanäle 14 und Absaugleitungen 15 mit einem Unterdruckerzeuger 16 verbunden sein können. Es ist jedoch auch jede andere aus dem Stand der Technik bekannte Technologie zur positionierten Halterung und Fixierung der in den Formhohlraum 6 einzulegenden Lederschicht 10 verwendbar.

Die Teilfläche 8, auf welcher zumindest zum Teil die Lederschicht 10 zum Hinterspritzen mit einem Kunststoff 17 aus einer Spritzgießvorrichtung 18 aufgelegt wird, ist mit einer strukturierten Oberfläche ausgebildet, die an die Lederstruktur eines Naturleders angepasst ist.

Dazu ist in der beispielsweise aus Stahl bestehenden Formwand 7 bzw. in dem unteren bzw. oberen Werkzeugteil 2, 3 eine Oberflächenstruktur ausgebildet.

Beispielsweise ist in den Fig. 1 und 2 gezeigt, dass in der Teilfläche 8, die in direktem Kontakt mit der Ansichtsseite 9 der Lederschicht 10 steht, eine strukturierte Oberfläche - schematisch dargestellt - vorgesehen ist. Diese strukturierte Oberfläche besteht aus erhabenen Bereichen 19 und benachbarten bzw. vertieften Bereichen 20 und ist der Struktur eines Naturleders nachgebildet. Diese erhabenen und vertieften Bereiche 19, 20 können mit verschiedenen Methoden und Verfahren hergestellt werden.

Diese erhabenen Bereiche 19, die im fertigen Formteil 22 die die Ledernarbung bildenden Vertiefungen darstellen, können nun über die Teilfläche 8 unmittelbar in der Formwand 7 des unteren und/oder oberen Werkzeugteils 2 bzw. 3 angeordnet sein.

Es ist aber auch möglich, mehrere Teilflächen 8 über die Formwand 7 verteilt anzuordnen, wenn mehrere Lederschichten 10 eingelegt werden.

Bevorzugt ist es aber auch zusätzlich oder anstelle dessen möglich, Abschnitte oder

Teilbereiche der Teilfläche 8 oder die gesamte Teilfläche 8 durch einen oder mehrere Einsatzteile 21 auszubilden, die in den jeweiligen unteren und/oder oberen Werkzeugteil 2, 3 eingesetzt werden können.

Die Verwendung derartiger Einsatzteile 21 ermöglicht es, in der laufenden Produktion unterschiedliche Oberflächengestaltungen bzw. strukturierte Oberflächen mit demselben Formwerkzeug 1 herzustellen bzw. die strukturierte Oberfläche besser zu warten.

Die strukturierte Oberfläche kann nun nach verschiedenen Methoden und Verfahren hergestellt werden. So ist es möglich, dass durch eine oder mehrere Schichten die erhabenen Bereiche 19 mittels PVD- (Physical Vapour Deposition) oder CVD-Verfahren (Chemical Vapour Deposition) auf Oberflächen abgeschieden werden. Beiden Verfahren ist gemeinsam, dass die Beschichtungsmaterialien aus der Dampfphase auf der Werkstückoberfläche abgeschieden werden. Beim PVD-Verfahren wird das Beschichtungsmaterial über die physikalischen Vorgänge des Verdampfens oder der Kathodenzerstäubung im Hochvakuum in die Dampfphase übergeführt und anschließend auf der zu beschichtenden Oberfläche niedergeschlagen. Beim CVD-Verfahren handelt es sich um die Abscheidung von Feststoffen aus der Gasphase, wobei die Gasphase im Gegensatz zu den PVD-Verfahren auf chemischem Weg erzeugt wird.

Besonders vorteilhaft ist es, wenn der Materialauftrag beispielsweise durch Nickel oder Nickellegierungen gebildet ist. Die durch Nickel oder Nickellegierungen gebildeten erhabenen Bereiche 19 in der Teilfläche 8 weisen eine sehr hohe Härte und damit auch eine hohe Standzeit für die durch den Spritzdruck hervorgerufenen Einprägungen in der Lederschicht 10 auf. Vor allem ist es mit durch im Stand der Technik bekannten Verfahren und Methoden möglich, die erhabenen Bereiche 19 in der Teilfläche 8 durch Abscheiden von Nickel oder Nickellegierungen aus der Dampfphase mit den zuvor erwähnten PVD- oder CVD-Verfahren herzustellen.

Als besonders vorteilhaft kann sich hierbei erweisen, wenn das Einsatzteil 21, auf dem eine Teilfläche 8 oder ein Teil einer Teilfläche 8 angeordnet ist, vollständig aus Nickel oder einer Nickellegierung besteht.

Es ist aber auch ohne weiteres möglich, die erhabenen Bereiche 19 durch Auftragen von Zusatzmaterial und Erwärmung mittels eines Laserstrahls herzustellen oder andere geeignete Verfahren einzusetzen.

Anstelle des Herstellens der erhabenen Bereiche 19 ist es auch möglich, in der Teilfläche 8 die den erhabenen Bereichen 19 benachbarten, vertieften Bereiche 20 durch entsprechende Abtragverfahren, wie beispielsweise Funkenerosionsverfahren oder Teilchen- oder Laserstrahlung oder elektro-chemische Verfahren, abzutragen, so dass die erhabenen Bereiche 19, die die Vertiefungen in der Lederstruktur darstellen sollen und beim Herstellen des Formteils 22 in die Oberfläche der Ansichtsseite 9 der Lederschicht 10 eingeprägt werden sollen, zu bilden. Nachdem das Volumen der in der Lederstruktur vertieften Bereiche üblicherweise wesentlich geringer ist als das der erhabenen Bereiche in der Ansichtsseite 9 von Naturleder, werden in vorteilhafter Weise bei derartigen Naturlederstrukturen Verfahren zum Auftragen der erhabenen Bereiche 19 eingesetzt.

Zur Herstellung von Formteilen 22 mit hoher Qualität werden üblicherweise Lederschichten 10 aus Naturleder verwendet. Während nun bei den bisher bekannten Verfahren zum Verstärken von Lederschichten 10 durch Hinterspritzen mit Kunststoffmaterial 17 die natürliche Oberflächenstruktur aufgrund der hohen Temperaturen und des hohen Spritzdruckes verloren gehen, da die Oberfläche an der hochpolierten Formfläche der Formwand 7 flachgedrückt wurde, ist durch die Anordnung der strukturierten Oberfläche zumindest in jenen Teilflächen 8, in welchen eine Lederschicht 10 eingelegt wird, sichergestellt, dass auch nach dem Hinterspritzen mit dem Kunststoffmaterial 17 auf der Ansichtsseite 9 eine lederartige Oberflächenstruktur erhalten bleibt bzw. diese in die Oberfläche der Ansichtsseite 9 bleibend und dauerhaft eingeprägt bzw. eingeformt wird.

Ein Vorteil der erfindungsgemäßen Lösung ist beispielsweise, dass nunmehr jegliche Art von Leder, beispielsweise auch Lederarten, die üblicherweise nur eine sehr schwache und zart ausgeprägte bzw. aber auch keine Strukturierung ihrer Oberfläche aufweisen; mit einer für den Konsumenten zur Darstellung der Hochwertigkeit der Ansichtsseite 9 benötigten strukturierten Oberfläche umgeformt werden können. Damit können auch Ledermaterialien, die teilweise strapazfähiger sind als jene, die eine extrem starke und gut erkennbare Narbung aufweisen, für die Herstellung hochwertiger Formteile 22 verwendet werden.

An dieser Stelle sei nur der Ordnung halber angemerkt, dass sämtliche Ausführungen, die für die Verwendung von Lederschichten 10 in Verbindung mit Naturleder gebildet werden, auch gleichermaßen für Kunstleder zuzurechnen sind. Es ist mit dem vorhergehenden Verfahren natürlich auch möglich, Kunstlederschichten mit einer dem Naturleder entsprechenden Narbung in dem Formwerkzeug 1 herzustellen.

Zweckmäßig ist es aber auch, in diesem Zusammenhang in Verbindung mit der Herstellung der strukturierten Oberfläche auf der eingelegten Lederschicht 10, die die optische Erkennbarkeit und den Hinweis auf die Verwendung von Leder für den Benutzer einfach ermöglicht, auch die Haptik für derart hergestellte Formteile 22 entsprechend dem gewohnten Gefühl von Naturleder zu vermitteln und auch die elastischen Eigenschaften der Lederschicht 10 bei verschiedenen herzustellenden Formteilen 22 beizubehalten. Um dies zu ermöglichen, ist es nun vorteilhaft, wenn auf der Innenseite 11 der Lederschicht 10 eine Sperrschicht 23 aufgebracht wird.

Diese Sperrschicht 23 hat nun die Aufgabe, das Eindringen des Kunststoffmaterials 17, welches während des Einspritzvorganges, das mit der Spritzgießvorrichtung 18 über die Einspritzöffnung 24 in den Formhohlraum 6 eingebracht wird, in die meist offenporige Innenseite 11 bzw. Fleischseite der Lederschicht 10, vor allem dann, wenn es sich um Naturleder handelt, zu verhindern. Damit wird gleichzeitig verhindert, dass der eingebrachte Kunststoff 17 die Lederschicht 10 in sich verstärkt und versteift und kann eine hohe, dem ursprünglichen räumlichen Verformungsverhalten einer Naturlederschicht entsprechende Elastizität der Lederschicht 10 auch nach dem Herstellen des entsprechenden Formteils 22 erhalten werden. Dies ist besonders dann von Vorteil, wenn dünnwandige Formteile 22, die wie beispielsweise bei Uhrenarmbändern, Gürteln oder dgl. sehr elastisch sein müssen, verwendet werden. Gleiches gilt für Anwendungen in der Möbel- und Automobilindustrie, bei Lederform- und Verkleidungsteilen, wie beispielsweise bei Sitzen, Armlehnen, Schalthebeln, Sonnenblenden oder dergleichen, die trotz einer hoher Beanspruchung eine gute Elastizität aufweisen sollen.

Eine noch höhere Elastizität kann dabei erreicht werden, wenn diese Sperrschicht 23 unter Zwischenschaltung einer Kleberschicht 25 mit der Innenseite 11 der Lederschicht 10 verbunden wird. Dadurch kann auch bei etwas dickeren Kunststoffschichten 26, die mit der Lederschicht 10 bzw. der Sperrschicht 23 durch Anspritzen bewegungsfest verbunden werden, eine hohe räumliche Relativbewegung zwischen dem steifen Kunststoffmaterial 17 und der Lederschicht 10 erzielt werden.

Für die mit der Lederschicht 10 oder der Sperrschicht 23 zu verbindende Kunststoffschicht 26 können die unterschiedlichsten Materialien verwendet werden. So können diese vor allem hinsichtlich ihrer Festigkeit und Elastizität bzw. Temperatureigenschaften auf den jeweiligen Anwendungsfall im Rahmen des Fachwissens eines auf diesem Gebiet tätigen Fachmanns ausgelegt werden.

Es ist aber ohne weiteres auch möglich, dass die Kunststoffschicht 26 zwischen zwei Lederschichten 10 eingebracht wird, wobei die Lederschichten 10 an einander gegenüberliegenden Teilflächen 8 im Formhohlraum 6 positioniert und gehalten werden können. Es ist unter anderem aber auch möglich, dass in der herzustellenden Kunststoffschicht 26 während des Hinterspritzens der Lederschicht 10 bzw. der Sperrschicht 23 entsprechende Aufnahmen, Halteteile und Fixierelemente und Schnappvorrichtungen mit hergestellt werden, um den Formteil 22 auf Halte- oder Stützstrukturen in der gewünschten Art und Weise befestigen zu können.

Für besondere Anwendungsfälle ist es auch möglich, dass die Kunststoffschicht 26 durch mehrere übereinander liegende Lagen aus gleichartigen oder unterschiedlichen, beispielsweise unterschiedlich eingefärbten oder mit unterschiedlichen physikalischen Eigenschaften versehene Kunststoffmaterialien 17 gebildet ist; ferner können derartige unterschiedliche Kunststoffschichten 26 auch nebeneinander über die gesamte Höhe des Formteils 22 zueinander benachbart angeordnet sein.

Beim Herstellen eines Formteils 22, bestehend aus einer Lederschicht 10 und einer Kunststoffschicht 26, wird nun derart vorgegangen, dass eine Lederschicht 10 mit ihrer Ansichtsseite 9 auf die dafür vorgesehene Formwand 7 bzw. Teilfläche 8 dieser Formwand 7 aufgelegt wird. Über die Mittel der Haltevorrichtung 12, beispielsweise einer partiell haftenden Kleberschicht oder Ansaugöffnungen 13 eines Unterdrucksystems kann die Lederschicht 10 auf dieser Formwand 7 bzw. Teilfläche 8 positioniert gehalten werden. Daraufhin wird das Formwerkzeug 1 durch Aufeinandersetzen des unteren und oberen Werkzeugteils 2 bzw. 3 geschlossen und ein nach Außen hin abgeschlossener Formhohlraum 6 gebildet. Auf der von der Ansichtsseite 9 der Lederschicht 10 abgewandten Seite dieser Lederschicht 10 bzw. der auf dieser aufgebrachten Sperrschicht 23 wird dann durch die Einspritzöffnung 24 der Kunststoff 17 mit hoher Temperatur und hohem Druck mittels der Spritzgießvorrichtung 18 eingebracht. Durch den sich im Formhohlraum 6 aufbauenden Spritzdruck wird die Lederschicht 10 mit ihrer Ansichtsseite 9 an die strukturierte Oberfläche der Teilfläche 8 angepresst. Durch den Druck des die Kunststoffschicht 26 bildenden Kunststoffmaterials 17 wird die Lederschicht 10 derart stark gegen die Oberfläche der Teilfläche 8 mit ihrer strukturierten Oberflächenform gedrückt, dass sich die erhabenen Bereiche 19 in die Ansichtsseite 9 der Lederschicht 10 einpressen bzw. diese Ansichtsseite 9 prägen, so dass diese die strukturierte Oberfläche der Teilfläche 8 übernimmt.

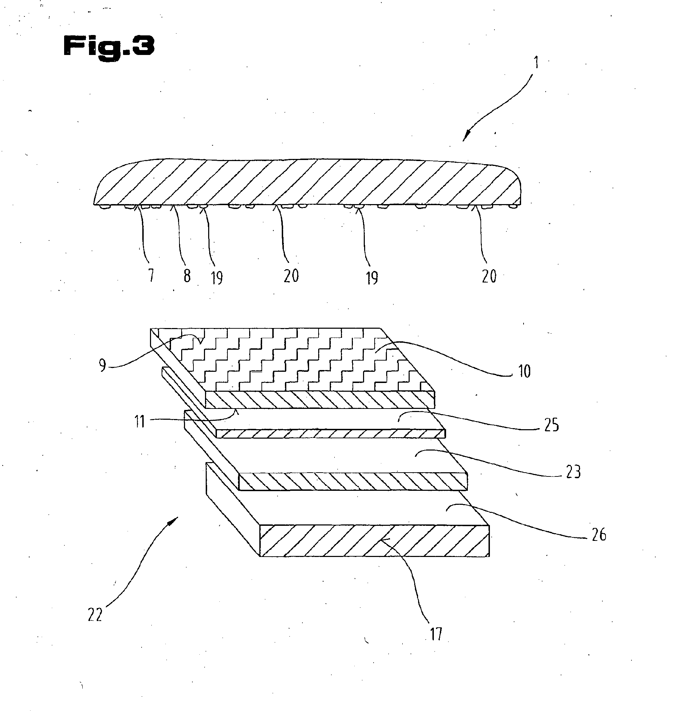

In der Fig. 3 ist ein Teil des Formwerkzeuges 1 sowie ein möglicher Schichtaufbau des Formteils 22 stark schematisch vereinfacht dargestellt. Die einzelnen den Formteil 22 bildenden Lagen bzw. Schichten sind dabei in voneinander getrennter Stellung in Art einer Explosionszeichnung dargestellt.

Der Formteil 22 umfasst hier wiederum die Lederschicht 10 mit ihrer Ansichtsseite 9 sowie der davon abgewendeten Innenseite 11. Die Sperrschicht 23 ist der von der Ansichtsseite 9 abgewendeten Innenseite 11 der Lederschicht 10 zugeordnet. Zwischen der Sperrschicht 23 und der Lederschicht 10 kann zur Verbesserung der Hafteigenschaften sowie der Verbindung zwischen den beiden Schichten eine oder mehrere Kleberschichten 25 vorgesehen sein. Eine derartige Schicht kann auch zusätzlich noch auf der der Kunststoffschicht 26 zugewendeten Oberfläche bzw. Seite der Sperrschicht 23 angeordnet werden.

Dieses Halbfertigprodukt bzw. Vorprodukt kann vor dem eigentlichen Herstellen des Formteiles 22 hergestellt werden, indem die Sperrschicht 23 gegebenenfalls unter Zwischenschaltung der Kleberschicht 25 an die Innenseite 11 der Lederschicht 10 angebracht wird. Dieses Aufbringen der Sperrschicht 23 kann aber auch durch einen Kaschiervorgang oder andere aus dem Stand der Technik bekannte Verbindungsvorgänge erfolgen.

Dieser vorbereitete Schichtaufbau des Halbfertigprodukts kann großflächig hergestellt werden und noch vor dem Einlegen in das Formwerkzeug 1 durch einen entsprechenden Zuschnittvorgang für die Herstellung des Formteils 22 konfektioniert werden.

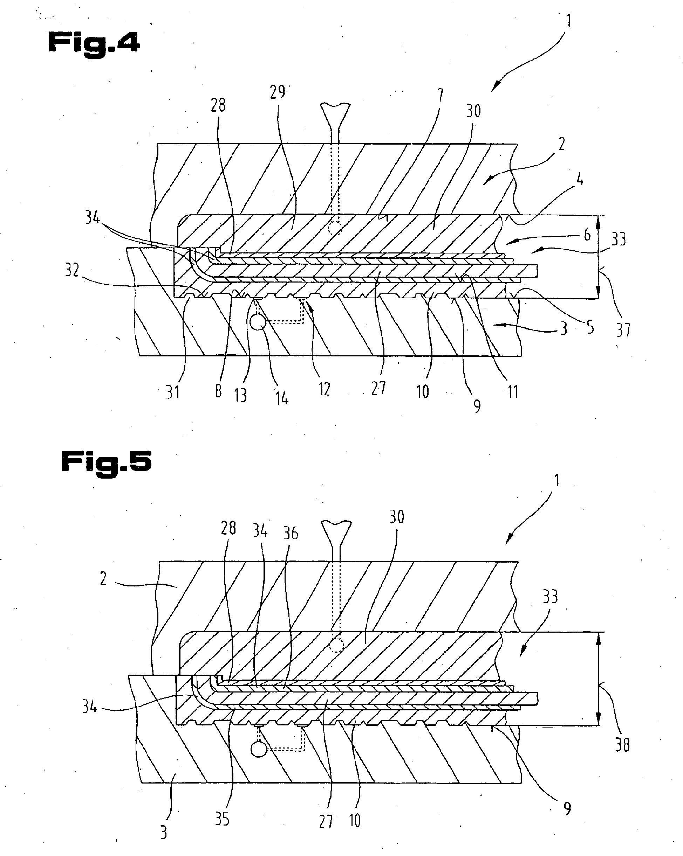

Das erfindungsgemäße Verfahren wird anhand eines weiteren Formwerkzeuges 1, wie es in Fig. 4 dargestellt ist, beschrieben, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Das Formwerkzeug 1 umfasst die Werkzeugteile 2, 3. Formwandteile 4 und 5 der Werkzeugteile 2 und 3 bilden zusammen die den Formhohlraum 6 umgrenzende Formwand 7. Auf einer Teilfläche 8 in einem der Werkzeugteile, im vorliegenden Fall im unteren Werkzeugteil 3, kann beispielsweise eine zu einer Oberflächenstruktur eines Naturleders komplementäre Oberflächenstruktur ausgebildet sein, auf der eine Ansichtsseite 9 einer Lederschicht 10 zur Anlage gebracht werden kann. Diese Ansichtsseite 9 ist üblicherweise glatt und strapazfähig, während die gegenüber liegende Innenseite 11, die Fleischseite, meist sehr grobporig und fasrig ausgebildet ist. Um eine derartige Lederschicht 10 auf einer Formwand eines Formwerkzeuges 1 zu positionieren, ist üblicherweise eine Haltevorrichtung 12 vorgesehen, die beispielsweise durch Ansaugöffnungen 13, die über einen Kanal 14 mit einem Unterdruckerzeuger verbunden sind, oder eine Haftschicht gebildet sein kann. Durch den Unterdruck kann die Lederschicht 10 in einer exakten Position im Formhohlraum 6 gehalten und positioniert werden.

Auf der Lederschicht 10 ist weiterhin eine Zwischenschicht 27 und eine Sperrschicht 28 angeordnet. Die Zwischenschicht 27 ist in zur Innenseite 11 der Lederschicht 10 senkrechter Richtung zumindest teilweise bleibend verformbar und aus Kunststoff hergestellt. Auf der von der Lederschicht 10 abgewendeten Seite der Zwischenschicht 27 ist eine Sperrschicht 28 ausgebildet oder als eigene Schicht auf dieser Zwischenschicht 27 angeordnet.

Die auf die Formwand 7 bzw. eine Teilfläche 8 der Formwand 7 aufgelegte Lederschicht 10 wird mit einem Kunststoff 29 zur Herstellung einer Kunststoffschicht 30 hinterspritzt.

Dabei kann es vorteilhaft sein, zur Beibehaltung einer einem Naturleder angepassten Oberflächenstruktur und Haptik der Lederschicht 10 und zur Schaffung einer derartigen Oberflächenstruktur, die Formwand 7 bzw. die Teilfläche 8 mit einer der Lederstruktur eines Naturleders angepassten strukturierten Oberfläche auszubilden. Dazu besteht, wie schematisch dargestellt, die strukturierte Oberfläche in der Teilfläche 8 aus erhabenen Bereichen 31 und diesen benachbarten, vertieften Bereichen 32 und ist die Struktur der erhabenen und vertieften Bereiche 31, 32 komplementär zur gewünschten Oberflächenstruktur eines Naturleders, von dem diese Struktur üblicherweise übernommen bzw. abgenommen wird. Die erhabenen und vertieften Bereiche 31, 32 können mit verschiedenen Methoden und Verfahren hergestellt werden.

Bei dem vorliegenden erfindungsgemäßen Verfahren wird nun der Kunststoff 29 zur Bildung eines Formteils 33 auf die Sperrschicht 28 aufgebracht. Der Kunststoff 29 wird dabei über eine Einspritzöffnung von einer schematisch angedeuteten Spritzgießvorrichtung eingespritzt und an die Sperrschicht 28 angeformt. Um eine Verlagerung zwischen der Lederschicht 10, der Zwischenschicht 27 und der Sperrschicht 28 während des Einbringens des Kunststoffes 29 in den Formhohlraum 6 zu vermeiden, können zwischen diesen einzelnen Schichten Kleberschichten 34, die beispielsweise auch durch Druck und/oder Temperatur aktivierbare Klebefolien 35, 36 gebildet sein können, angeordnet sein.

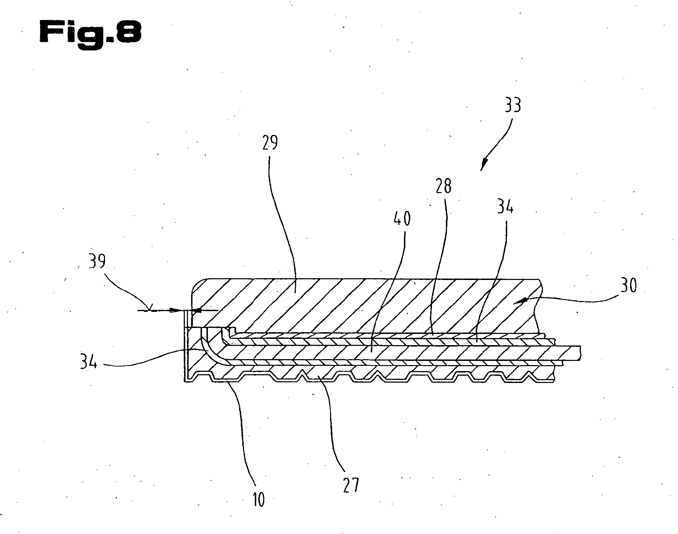

Durch den beim Einbringen des Kunststoffes 29 in den Formhohlraum 6 sich aufbauenden Druck, bedingt durch den Einspritzdruck des Kunststoffes 29, werden die Oberflächenstrukturen, die in dem Formwandteil 4, 5 bzw. in einer Teilfläche 8 derselben angeordnet sind, in die Oberfläche der Ansichtsseite 9 der Lederschicht 10 bzw. Kunstlederschicht eingeprägt oder es wird die Lederschicht 10 insgesamt räumlich verformt, wobei die Lederschicht 10 - wie es besser aus Fig. 8 ersichtlich ist - partiell, in den erhabenen Bereichen 31 der Teilfläche 8 in die Zwischenschicht 27 gepresst wird. Gleichzeitig wird die elastisch verformbare Zwischenschicht 27 verdichtet.

Wie aus der Darstellung der Fig. 4 zu ersehen ist, weist das Formteil 33 während des Spritzvorganges bzw. so lange es im Formhohlraum 6 angeordnet und die Werkzeugteile 2, 3 geschossen sind, eine Dicke 37 auf.

In Abhängigkeit von den für die Zwischenschicht 27 verwendeten Materialien, insbesondere einem elastisch verformbaren Kunststoffschaum und der Eindruckhärte dieses Kunststoffschaums, bleibt die Stärke bzw. Dicke dieser Zwischenschicht 27 während des Einspritzvorgangs des Kunststoffes 29 unverändert oder wird auch die Stärke bzw. Dicke dieser Zwischenschicht 27 durch plastische Verformung des Materials dieser Zwischenschicht 27 verringert.

Je nach dem eingesetzten bzw. gewünschten Kunststoffmaterial, und zwar in Abhängigkeit davon, ob beispielsweise der Kunststoffschaum, aus dem die Zwischenschicht 27 hergestellt ist, elastisch rückstellbare Eigenschaften aufweist oder nicht, bleibt diese Dicke 37 auch nach dem Entnehmen des Formteils 33 erhalten.

Wird dagegen, wie aus dem Vergleich der Darstellungen des Formteils 33 in den Fig. 4 und 5 zu ersehen ist, die Zwischenschicht 27 aus einem Material hergestellt, welches elastisch rückstellbar ist - z.B. durch Gasbildung in der Zwischenschicht 27 während der Druck- und Temperaturbeanspruchung beim Einspritzen des Kunststoffes 29 - so wird sich nach dem Entnehmen des Formteils 33 aus dem Formhohlraum 6 die Zwischenschicht 27 in einem mehr oder weniger großen Ausmaß rückstellen und eine Dicke 38 des Formteils 33 nach dem Entnehmen aus dem Formhohlraum 6 grösser sein, als die Dicke 37 während der Herstellung oder vor bzw. nach dem Einspritzen des Kunststoffes 29 und vor der Entnahme des Formteils 33 aus dem Formwerkzeug 1.

Diese Anordnung der Zwischenschicht 27 ermöglicht nun die Elastizitätseigenschaften der Lederschicht 10 bzw. des gesamten Formteils 33 an unterschiedlichste Anwendungsfälle und Eigenschaften anzupassen.

So kann durch entsprechende Bemessung der Zwischenschicht 27 eine Dämpfung bei einem Auftreffen von Gegenständen oder Personen auf derartige Formteile 33 entsprechend voreingestellt werden. Es ist aber auch möglich, die Expansions- und Dehnungseigenschaften der Lederschicht 10 bzw. des gesamten Formteils 33 bei unterschiedlichen Temperaturen oder Belastungen zu verändern. Darüber hinaus können auch entsprechende andere physikalische Eigenschaften durch die Dicke dieser Zwischenschicht und deren physikalischen und chemischen Eigenschaften, wie beispielsweise eine Schalldämmung, erzielt werden.

Wird die Zwischenschicht 27 aus einem Material herstellt, welches elastisch rückstellbare Eigenschaften aufweist, so ist es auch möglich, dass sich bei einer Druckbelastung des Formteils 1 in einzelnen Bereichen oder über die ganze Fläche, die Oberfläche der Lederschicht 10 wieder elastisch in ihre Ausgangslage rückstellen kann, so dass eine hohe Qualität und eine lange Benutzungsdauer auch bei entsprechenden mechanischen Beanspruchungen solcher Formteile 33 erzielt werden kann.

Bevorzugt werden für diese Zwischenschicht 27 elastisch verformbare Kunststoffschäume, wie z.B. aus Polyurethan (PUR), Polyethylen (PE), Polyimid (PI), Polyether, Silikon, Silikonelastomer, Memoryschaum, offenporigen Polyurethanschaum, offenporigen Latexschaum und dergleichen, eingesetzt bzw. beliebig miteinander kombiniert, wobei der Memoryschaum ein Polyurethanschaum auf Esterbasis mit ausgeprägtem viscoelastischem Verhalten ist. Für die Wirkung dieser Zwischenschicht 27 ist es auch vorteilhaft, wenn die Eindrucktiefe dieser Zwischenschicht 27 und in Verbindung damit deren Stärke bzw. Dicke derart bemessen wird, dass die bleibende Verformung des Kunststoffmaterials bzw. die Eindrucktiefe durch den Spritzdruck beim Einspritzen des Kunststoffes 29 geringer ist, als die Stärke bzw. Dicke der Zwischenschicht 27 beim Einlegen in das Formwerkzeug 1.

Durch die Ausbildung der Sperrschicht 28 wird gleichzeitig verhindert, dass der plastifizierte Kunststoff 29 während des Einspritzens in den Formhohlraum 6 in die Zwischenschicht 27 bzw. in die Innenseite der Lederschicht 10 eindringen kann. Damit bleiben die Elastizitätseigenschaften der Zwischenschicht 27 und der Lederschicht 10 auch beim Aushärten des Kunststoffes 29, der üblicherweise eine höhere Festigkeit und geringere räumliche Verformbarkeit als die Lederschicht 10 und die Zwischenschicht 27 aufweist, erhalten. Es tritt keine Versteifung der Schaumstoffstrüktur der Zwischenschicht 27 durch eingedrungenen, sich während des Abkühlens verfestigenden Kunststoff 29 der Kunststoffschicht 30 ein.

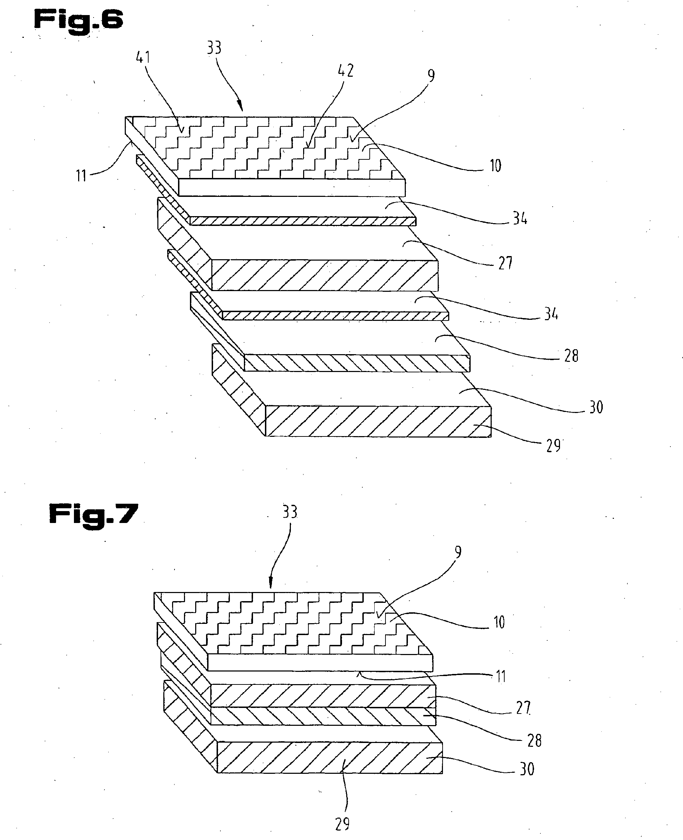

In Fig. 6 ist der Aufbau eines Formteils 33 gezeigt. Es ist ersichtlich, dass die Lederschicht 10 auf ihrer Ansichtsseite 9 mit einer Oberflächenstruktur, d.h. mit erhabenen Bereichen 41 und mit vertieften Bereichen 42 versehen ist, wobei diese Oberflächenstruktur der Oberflächenstruktur einer gewünschten Lederart möglichst entspricht.

Diese Lederschicht 10 ist über eine Kleberschicht 34 mit der Zwischenschicht 27 und diese über eine weiter Kleberschicht 34 mit der Sperrschicht 28 verbunden.

Auf diese Sperrschicht 28, die ein Durchdringen des plastifizierten Kunststoffes 29 verhindert, wird der Kunststoff 29 aufgespritzt und durch den Spritzvorgang und die Erwärmung und die durch den Kunststoff gegebenen Eigenschaften an die Sperrschicht 28 angeformt. Damit wird nicht nur eine in senkrechter Richtung zur Lederschicht 10 voreinstellbare Verformung im Zusammenhang mit den physikalischen Eigenschaften vor allem der Zwischenschicht 27 sowie deren Stärke bzw. Dicke erzielt, sondern aufgrund des mehrschichtigen Aufbaus kann sich auch die Lederschicht 10, bedingt durch die Relativbeweglichkeiten, in Abhängigkeit von der Restelastizität der Kleberschicht 34 gegenüber der Zwischenschicht 27 und der Sperrschicht 28 bzw. dem Kunststoff 29 der Kunststoffschicht 30 in beliebiger Richtung in der Ebene der Lederschicht 10 verformen bzw. verlagern und verschieben, so dass auch bei starken schlagartigen Beanspruchungen mit spitzeren Objekten ein Aufplatzen oder Zerreißen der Lederschicht 10, vor allem auch bei dünneren Lederschichten 10, verhindert werden kann. Damit wird eine hoch strapazierbare Oberfläche im Lederdesign geschaffen. Durch die entsprechende Ausbildung der Kunststoffschicht 30 können gleichzeitig zur Befestigung des Formteils 33 z.B. durch das Anformen und das Einformen von Befestigungsteilen, Aufnahmen oder Schnappvorrichtungen geschaffen werden.

Bei der Ausführungsvariante des Formteils 33 in Fig. 7 ist gezeigt, dass die Zwischenschicht 27 auch ohne Zwischenschaltung einer Kleberschicht 34 an eine Innenseite 11 der Lederschicht 10 angeformt sein kann. Es ist dabei möglich, den Kunststoffschaum für die Herstellung der Zwischenschicht 27 direkt flüssig auf die Lederschicht 10, beispielsweise in einem kontinuierlichen Durchlaufverfahren aufzubringen. Bei dem offenporigen Kunststoffschaum, aus dem die Zwischenschicht 27 zweckmäßig gebildet sein kann, kann dabei durch Abkühlung auf der von der Lederschicht 10 abgewandten Seite bewirkt werden, dass sich die Poren schließen und eine geschlossenporige Oberfläche auf der Zwischenschicht 27 entsteht, die unmittelbar - wie schematisch angedeutet - eine angeformte Sperrschicht 28 bildet. Es ist aber andererseits beispielsweise auch möglich, vorgefertigte Zwischenschichten 27 zu verwenden, die auf einer Seite mit einer Kleberfolie 34 zum Verbinden mit der Innenseite 11 der Lederschicht 10 vorbereitet werden und deren Poren auf der gegenüberliegenden Seite durch Druck und/oder Temperatur Beeinflussung verschlossen werden, so dass sie die Sperrschicht 28 bilden. Auf diese Sperrschicht 28 kann dann unmittelbar der plastifizierte Kunststoff 29 der Kunststoffschicht 30 aufgebracht werden.

Bei dem in Fig. 8 gezeigten, erfindungsgemäß ausgebildeten Formteil 33 werden eine Lederschicht 10 mit geringer Dicke 39 verwendet. Bei entsprechender Verformung durch die strukturierte Oberfläche, mit der ein Formwandteil 4, 5 oder eine Teilfläche 8 der Formwand 7 versehen ist, kommt es zu einer räumlichen Verformung der gesamten Lederschicht. Dies kann dadurch erreicht werden, dass die Zwischenschicht 27 derart ausgelegt ist, dass sie eine bleibende plastische Verformung in Anpassung der Verformung der Lederschicht 10 zulässt und in dieser Position "verfestigt" bzw. die Position "eingefroren wird". Es ist jedoch auch möglich, für die Erzielung der unterschiedlichen Eigenschaften, wie die Verformung der Lederschicht 10 oder die Beibehaltung von Dämpfungs- oder Schallschutzeigenschaften, auch mehrere Zwischenschichten 27 hintereinander zu verwenden, wobei eine erste Zwischenschicht 27 zur Aufnahme der Verformung der Lederschicht 10 ausgebildet sein kann, wogegen eine zweite Zwischenschicht 40 mit entsprechenden elastischen Rückstelleigenschaften versehen werden kann, so dass nach dem Verformen der Lederschicht 10 und dem Einpressen des Kunststoffes 29 der Kunststoffschicht 30 die elastischen Eigenschaften bzw. Verformungsmöglichkeiten der Lederschicht 10 beibehalten werden.

Die Sperrschicht 23, 28 kann dabei durch ein den Einflüssen der Witterung, der UV-Strahlung oder den mechanischen Beanspruchungen einen hohen Widerstand entgegensetzendes Material, wie beispielsweise PVC, PMMA, PP, PE, PETP oder dergleichen gebildet sein. Diese verschiedenen Materialien können zusätzlich mit verschiedenen Stabilisatoren oder dergleichen versetzt sein, um beispielsweise den Durchtritt von UV oder sonstigen Strahlungen möglichst zu unterbinden.

Die Sperrschicht 23, 28 kann auch mehrere Lagen umfassen und beispielsweise aus einer Lage aus Textil oder einem Gitter bzw. Netz oder einer Matte, insbesondere aus Metall oder beliebigen anderen Fasern bzw. Fäden oder einem Gewirke bzw. Vlies, verstärkt sein. Es ist aber auch möglich, die Sperrschicht 23, 28 beispielsweise durch eine bedruckte Lage aus Papier herzustellen. Sie kann aber ebenso durch beliebige Kunststoffe, Kunststofffolien oder Formkörper oder dergleichen gebildet sein.

Diese Sperrschicht 23, 28 kann über die Kleberschicht 25, 34 mit der Lederschicht 10 oder zumindest einer der Zwischenschichten 27, 40 verbunden sein, die die Lederschicht 10 vor übermäßigen Druck-, Temperatur- oder Scherbeanspruchungen während des Aufbringens der Kunststoffschicht 26, 30 schützen soll. Um den hohen Beanspruchungen während des Einbringens des flüssigen Kunststoffmaterials 17, 29 mit hoher Temperatur zu widerstehen, kann die Sperrschicht 23, 28 aus einem Polytetrafluorethylen gebildet sein. Zur vollflächigen Verbindung der Sperrschicht 23, 28 mit der Kunststoffschicht 26, 30 kann auf die Sperrschicht 23, 28 eine zusätzliche Schicht bestehend aus einem Haftvermittler aufgebracht sein.

Als Werkstoffe zur Bildung der Sperrschicht 23, 28, der Kleberschicht 25, 34 sowie der Kunststoffschicht 26, 30 können die verschiedensten Materialien, vor allem aber auch Kunststofffolien, vorteilhaft aus der Gruppe der nachstehenden, beispielhaft und nicht vollständig aufgezählten Materialien, wie PVC (hart, weich), PC, PET, PET-P, PS, PA, CA, PP, PE, PMMA, ABS und EAA gewählt werden. Für die Herstellung der Kunststoffschicht 26, 30, vor allem durch einen Spritzgussvorgang, können grundsätzlich alle Kunststoffmaterialien, die dafür geeignet sind, verwendet werden, wobei jedoch beispielsweise Materialien wie PP, POM, ABS, SAN, PMMA, TPU, EAA, PUR, PC verwendbar sind.

Der in der Beschreibung und in den Ansprüchen verwendete Begriff Leder für die Lederschicht 10 umfasst dabei Naturleder als auch Kunstleder. Bei Kunstleder wird ein Verbund von textilem Gewebe mit einer Beschichtung aus Kunststoff verstanden. Hierbei handelt es sich um Naturfasergewebe oder Kunstfasern, die mit einer weichen PVC-Schicht beschichtet sind. Diese Beschichtungen können je nach Anwendungsfall kompakt oder geschäumt ausgeführt werden. In aller Regel sind die Oberflächen noch genarbt oder werden beim Herstellen der Kunststoffschicht 26, 30 genarbt, sodass sie einer Lederstruktur entsprechen. Anwendungsbeispiele für Kunstleder sind Armbänder, Gürtel, Ausstattungs- und Verkleidungsteile in der Automobilindustrie, Schuhe, Taschen, Bälle (z.B. Fußbälle). Moderne Kunstleder sind häufig anstelle der PVC-Beschichtung mit einer Polyurethan-Beschichtung versehen.

Für die Sperrschicht 23, 28 können beispielsweise auch Folien oder Lagen aus den vorgenannten Materialien verwendet werden.

Für die Kleberschichten 25, 34 können alle aus dem Stand der Technik bekannten unterschiedlichen Klebefolien oder Kleberschichten, die auch flüssig aufgetragen werden können, eingesetzt werden.

Der Ordnung halber sei abschließend darauf hingewiesen, dass zum besseren Verständnis des Aufbaus des Formwerkzeuges 1 sowie des Formteils 22, 33 dieser bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Die Ausführungsbeispiele zeigen mögliche Ausführungsvarianten des Formwerkzeuges 1 sowie des Formteils 22, 33, wobei an dieser Stelle bemerkt sei, dass die Erfindung nicht auf die speziell dargestellten Ausführungsvarianten eingeschränkt ist, sondern vielmehr auch diverse Kombinationen der einzelnen Ausführungsvarianten untereinander möglich sind und diese Variationsmöglichkeiten aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Vor allem können die einzelnen in den Fig. 1, 2; 3; 4; 5; 6; 7; 8 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

**Bezugszeichenaufstellung**

| | | | |
|---|---|---|---|
| 1 : | Formwerkzeug | 38 : | Dicke |
| 2 : | oberer Werkzeugteil | 39 : | Dicke |
| 3 : | unterer Werkzeugteil | 40 : | Zwischenschicht |
| 4 : | Formwandteil | | |
| 5 : | Formwandteil | 41 : | Bereich |
| | | 42: | Bereich |
| 6 : | Formhohlraum | | |
| 7 : | Formwand | | |
| 8 : | Teilfläche | | |
| 9 : | Ansichtsseite | | |
| 10 : | Lederschicht | | |
| | | | |
| 11 : | Innenseite | | |
| 12 : | Haltevorrichtung | | |
| 13 : | Ansaugöffnung | | |
| 14 : | Kanal | | |
| 15 : | Absaugleitung | | |
| | | | |
| 16 : | Unterdruckerzeuger | | |
| 17 : | Kunststoff | | |
| 18 : | Spritzgießvorrichtung | | |
| 19 : | Bereich | | |
| 20 : | Bereich | | |
| | | | |
| 21 : | Einsatzteil | | |
| 22 : | Formteil | | |
| 23 : | Sperrschicht | | |
| 24 : | Einspritzöffnung | | |
| 25 : | Kleberschicht | | |
| | | | |
| 26 : | Kunststoffschicht | | |
| 27 : | Zwischenschicht | | |
| 28 : | Sperrschicht | | |
| 29 : | Kunststoff | | |
| 30 : | Kunststoffschicht | | |
| | | | |
| 31 : | Bereich | | |
| 32 : | Bereich | | |
| 33 : | Formteil | | |
| 34 : | Kleberschicht | | |
| 35 : | Klebefolie | | |
| | | | |
| 36 : | Klebefolie | | |
| 37 : | Dicke | | |

## Patentansprüche

1. Verfahren zur Herstellung eines Formteils (22, 33), bei dem eine Lederschicht (10) mit ihrer Ansichtsseite (9) auf eine Formwand (7) eines Formwerkzeuges (1) aufgelegt und ein Kunststoffmaterial (17, 29) zur Bildung einer Kunststoffschicht (26, 30) auf der Innenseite (11) der Lederschicht (10) unter Druck in einen Formhohlraum (6) des Formwerkzeugs eingebracht wird, wobei zumindest eine Teilfläche (8) der Formwand (7) mit einer an eine Lederstruktur angepassten, strukturierten Oberfläche versehen ist, so dass durch den Druck des die Kunststoffschicht (26, 30) bildenden Kunststoffmaterials (17, 29) die Ansichtsseite (9) der Lederschicht (10) gegen die mit der strukturierten Oberfläche versehene Formwand (7) angepresst und die Struktur der Formwand in die Ansichtsseite (9) der Lederschicht (10) eingeprägt wird, wobei zwischen der Lederschicht (10) und der Kunststoffschicht (26, 30) eine Sperrschicht (23, 28) angeordnet wird, **dadurch gekennzeichnet, dass** die Sperrschicht (23, 28) aus einer druck- und wärmebeständigen Kunststofffolie, insbesondere aus PVC besteht und dass die Schmelztemperatur der Sperrschicht (23, 28) höher ist als die Einbringtemperatur des Kunststoffs (17, 29) der Kunststoffschicht (26, 30) ist.

2. Verfahren gemäß Anspruch 1, **dadurch gekennzeichnet, dass** die Sperrschicht (23, 28) aus Polyvinylchlorid gebildet wird.

3. Verfahren gemäß einem der vorangehenden Ansprüche, **dadurch gekennzeichnet, dass** der eingebrachte Kunststoff (17, 29) der Kunststoffschicht (26, 30) aus einem Material aus der Gruppe aus Polyvinylchlorid, ABS, Polyurethan gebildet wird.

4. Formteil (22, 33) umfassend eine Lederschicht (10) und eine auf einer von der Ansichtsseite (9) der Lederschicht (10) abgewandten Seite angeordneten Kunststoffschicht (26, 30), wobei die Leder- (10) und die Kunststoffschicht **dadurch** verbunden werden, dass die Lederschicht (10) mit ihrer Ansichtsseite (9) auf eine Formwand (7) eines Formwerkzeuges (1) aufgelegt wird und ein Kunststoffmaterial (17, 29), zur Bildung einer Kunststoffschicht (26, 30) auf der Innenseite (11) der Lederschicht (10), unter Druck in einen Formhohlraum (6) des Formwerkzeugs eingebracht wird, wobei durch den Druck beim Einbringen des Kunststoffs in die Ansichtsseite (9) der Lederschicht (10) eine Struktur der Oberfläche der Formwand (7) eingeprägt ist, wobei zwischen der Lederschicht (10) und der Kunststoffschicht eine Sperrschicht (23, 28) angeordnet ist, **dadurch gekennzeichnet, dass** die Sperrschicht (23, 28) aus einer druck- und wärmebeständigen Kunststofffolie, insbesondere aus PVC besteht und dass die Schmelztemperatur der Sperrschicht (23, 28) höher ist als die Einbringtemperatur des Kunststoffs (17, 29) der Kunststoffschicht (26, 30) ist.

5. Formteil (22, 33) gemäß Anspruch 4, **dadurch gekennzeichnet, dass** die Sperrschicht (23, 28) aus Polyvinylchlorid besteht.

6. Formteil (22, 33) gemäß einem der Ansprüche 4 bis 5, **dadurch gekennzeichnet, dass** der eingebrachte Kunststoff (17, 29) der Kunststoffschicht (26, 30) aus einem Material aus der Gruppe aus Polyvinylchlorid, ABS, Polyurethan gewählt ist.

## Claims

1. A method for manufacturing a moulded part (22, 33), in which a leather layer (10) is placed onto a mould wall (7) of a moulding tool (1) with its visible side (9) and a plastic material (17, 29) is injected under pressure into a mould cavity (6) of the moulding tool in order to produce a plastic layer (26, 30) on the inner side (11) of the leather layer (10), wherein at least a partial area (8) of the mould wall (7) is provided with a structured surface that is adapted to a leather structure such that the visible side (9) of the leather layer (10) is pressed against the mould wall (7) provided with the structured surface due to the pressure of the plastic material (17, 29) forming the plastic layer (26, 30) and the structure of the mould wall is impressed into the visible side (9) of the leather layer (10), and wherein a blocking layer (23, 28) is arranged between the leather layer (10) and a plastic layer (26, 30), **characterized in that** the blocking layer (23, 28) consists of a pressure-resistant and heat-resistant plastic film, particularly of PVC, and **in that** the melting temperature of the blocking layer (23, 28) is higher than the injection temperature of the plastic (17, 29) of the plastic layer (26, 30).

2. The method according to claim 1, **characterized in that** the blocking layer (23, 28) consists of polyvinyl chloride.

3. The method according to one of the preceding claims, **characterized in that** the injected plastic (17, 29) of the plastic layer (26, 30) consists of a material from the group comprising polyvinyl chloride, ABS and polyurethane.

4. A moulded part (22, 33) comprising a leather layer (10) and a plastic layer (26, 30) that is arranged on a side of the leather layer (10) that faces away from the visible side (9), wherein the leather layer (10) and the plastic layer are connected in that the leather layer (10) is placed onto a mould wall (7) of a moulding tool (1) with its visible side (9) and a plastic material (17, 29) is injected under pressure into a mould cavity (6) of the moulding tool in order to produce a plastic layer (26, 30) on the inner side (11) of the leather layer (10), wherein a structure of the surface of the mould wall (7) is impressed into the visible side (9) of the leather layer (10) due to the pressure generated during the injection of the plastic material, and wherein a blocking layer (23, 28) is arranged between the leather layer (10) and the plastic layer, **characterized in that** the blocking layer (23, 28) consists of a pressure-resistant and heat-resistant plastic film, particularly of PVC, and **in that** the melting temperature of the blocking layer (23, 28) is higher than the injection temperature of the plastic (17, 29) of the plastic layer (26, 30).

5. The moulded part (22, 33) according to claim 4, **characterized in that** the blocking layer (23, 28) consists of polyvinyl chloride.

6. The moulded part (22, 33) according to one of claims 4 to 5, **characterized in that** the injected plastic (17, 29) of the plastic layer (26, 30) consists of a material from the group comprising polyvinyl chloride, ABS and polyurethane.

## Revendications

1. Procédé de fabrication d'une pièce moulée (22, 33), dans lequel une couche de cuir (10) est posée par sa face visible (9) sur une paroi de moule (7) d'un outillage de moulage (1) et une matière plastique (17, 29) est introduite pour former une couche de plastique (26, 30) sur la face interne (11) de la couche de cuir (10) sous pression dans une cavité de moulage (6) de l'outillage de moulage, au moins une surface partielle (8) de la paroi du moule (7) étant pourvue d'une surface structurée adaptée à une structure du cuir, de sorte que, sous la pression de la matière plastique (17, 29) constituant la couche de plastique (26, 30), la face visible (9) de la couche de cuir (10) est comprimée contre la paroi du moule (7) pourvue de la surface structurée et la structure de la paroi du moule est gaufrée dans la face visible (9) de la couche de cuir (10), une couche faisant barrage (23, 28) étant disposée entre la couche de cuir (10) et la couche de plastique (26, 30), **caractérisé en ce que** la couche faisant barrage (23, 28) est composée d'un film de plastique résistant à la pression et à la chaleur, en particulier en PVC, et que la température de fusion de la couche faisant barrage (23, 28) est supérieure à la température d'introduction de la matière plastique (17, 29) de la couche de plastique (26, 30).

2. Procédé selon la revendication 1, **caractérisé en ce que** la couche faisant barrage (23, 28) est constituée de chlorure de polyvinyle.

3. Procédé selon une des revendications précédentes, **caractérisé en ce que** la matière plastique (17, 29) introduite de la couche de plastique (26, 30) est constituée d'un matériau du groupe composé du chlorure de polyvinyle, de l'ABS, du polyuréthane.

4. Pièce moulée (22, 33), comportant une couche de cuir (10) et une couche de plastique (26, 30) disposée sur une face détournée de la face visible (9) de la couche de cuir (10), les couches de cuir (10) et de plastique étant raccordées en posant la couche de cuir (10) par sa face visible (9) sur une paroi de moule (7) d'un outillage de moulage (1) et une matière plastique (17, 29) étant, pour former une couche de plastique (26, 30), introduite sur la face interne (11) de la couche de cuir (10) sous pression dans une cavité de moulage (6) de l'outillage de moulage, une structure de surface de la paroi du moule (7) étant gaufrée sous l'effet de la pression lors de l'introduction de la matière plastique dans la face visible (9) de la couche de cuir (10), une couche faisant barrage (23, 28) étant disposée entre la couche de cuir (10) et la couche de plastique, **caractérisée en ce que** la couche faisant barrage (23, 28) est composée d'un film de plastique résistant à la pression et à la chaleur, en particulier en PVC, et que la température de fusion de la couche faisant barrage (23, 28) est supérieure à la température d'introduction de la matière plastique (17, 29) de la couche de plastique (26, 30).

5. Pièce moulée (22, 33) selon la revendication 4, **caractérisée en ce que** la couche faisant barrage (23, 28) est composée de chlorure de polyvinyle.

6. Pièce moulée (22, 33) selon une des revendications 4 à 5, **caractérisée en ce que** la matière plastique introduite (17, 29) de la couche de plastique (26, 30) est sélectionnée parmi les matériaux du groupe composé du chlorure de polyvinyle, de l'ABS, du polyuréthane.
